(19) **Europäisches Patentamt / European Patent Office / Office européen des brevets**

(11) **EP 4 572 443 A1**

(12) **EUROPEAN PATENT APPLICATION**
published in accordance with Art. 153(4) EPC

(43) Date of publication:
**18.06.2025 Bulletin 2025/25**

(21) Application number: **23852845.9**

(22) Date of filing: **01.08.2023**

(51) International Patent Classification (IPC):
*H04W 64/00* (2009.01)    *H04W 24/08* (2009.01)
*G01S 5/02* (2010.01)    *G06N 20/00* (2019.01)

(52) Cooperative Patent Classification (CPC):
**G01S 5/02; G06N 20/00; H04W 24/08; H04W 64/00**

(86) International application number:
**PCT/KR2023/011207**

(87) International publication number:
**WO 2024/034965 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 KR 20220100962**
**16.02.2023 US 202363446298 P**

(71) Applicant: **LG Electronics Inc.**
**Yeongdeungpo-gu**
**Seoul 07336 (KR)**

(72) Inventors:
• **CHUNG, Jaehoon**
**Seoul 06772 (KR)**

• **PARK, Haewook**
**Seoul 06772 (KR)**
• **HWANG, Seunggye**
**Seoul 06772 (KR)**
• **KIM, Kijun**
**Seoul 06772 (KR)**
• **KO, Hyunsoo**
**Seoul 06772 (KR)**
• **KANG, Jiwon**
**Seoul 06772 (KR)**
• **LEE, Jeongsu**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING SIGNAL IN WIRELESS COMMUNICATION SYSTEM**

(57)    A method by which a device operates in a wireless communication system, according to at least one of the embodiments disclosed in the present specification, comprises: obtaining line of sight (LoS)-related information for at least one reference signal for positioning on the basis of an artificial intelligence/machine learning (AI/ML) model; and transmitting a signal including the LoS related information, wherein the LoS related information may include information about the reliability of determination by the AI/ML model regarding whether each reference signal is provided through the LoS or non-line of sight (NLoS).

**FIG. 18**

Obtain LoS related information based on AI/ML model — C05

Transmit signal including LoS related information — C10

EP 4 572 443 A1

## Description

### TECHNICAL FIELD

The disclosure relates to a wireless communication system, and more particularly, to a method and apparatus for transmitting/receiving an uplink/downlink wireless signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

The present disclosure is to provide a method and apparatus for effectively performing a process of transmitting and receiving a radio signal.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

According to an aspect, a method of operating a device in a wireless communication system includes obtaining light of sight (LoS) related information regarding at least one reference signal for positioning based on an artificial intelligence/machine learning (AI/ML) model, and transmitting a signal including the LoS related information, wherein the LoS related information includes information regarding reliability of determination by the AI/ML model regarding whether each reference signal is provided via LoS or non-line of sight (NLoS).

The reliability information may include the LoS probability calculated by the AI/ML model.

The LoS related information may be provided individually for each of the at least one reference signal.

The LoS related information may be provided individually for each arrival path of each reference signal.

The LoS related information may be provided for a reference signal having a LoS probability equal to or greater than a threshold.

A reference signal configuration to be used for positioning may be determined based on the LoS related information.

At least one of a reference signal transmission power and a reference signal muting pattern may be determined based on the LoS related information.

The reference signal transmission power and the reference signal muting pattern may be determined for each transmission reception point (TRP).

The device may receive the at least one reference signal for positioning.

The device may be a user equipment (UE), a transmission reception point (TRP), a BS or a network node related to positioning.

According to another aspect, a processor-readable recording medium having recorded thereon a program for executing the method may be provided.

According to another aspect, a device for performing the method may include a memory storing instructions, and a processor configured to execute the instructions to operate. The operation of the processor may include obtaining light of sight (LoS) related information regarding at least one reference signal for positioning based on an artificial intelligence/machine learning (AI/ML) model, and transmitting a signal including the LoS related information. The LoS related information may include information regarding reliability of determination by the AI/ML model regarding whether each reference signal is provided via LoS or non-line of sight (NLoS).

The device may further include a transceiver configured to transmit or receive a radio signal under control of the processor.

The device may be a user equipment (UE), a transmission reception point (TRP), a base station (BS) or a network node related to positioning.

**Advantageous Effects**

According to an embodiment, wireless signal transmission and reception may be efficiently performed in a wireless communication system.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink shared channel (PDSCH) and ACK/NACK transmission and reception process.
FIG. 6 illustrates an exemplary physical uplink shared channel (PUSCH) transmission process.
FIG. 7 shows an example of a CSI related procedure.
FIG. 8 is a view for explaining a concept of AI/ML/Deep learning.
FIGS. 9 to 12 show various AI/ML models of deep learning.
FIG. 13 is a diagram illustrating split AI inference.
FIG. 14 is a diagram illustrating a framework for 3GPP RAN intelligence.
FIGS. 15 to 17 illustrate AI model training and inference environments.
FIG. 18 is a diagram for explaining a device operation according to an embodiment.
FIG. 19 is a diagram for explaining a UE operation according to an embodiment.
FIG. 20 is a diagram for explaining operations of BS/TRPs according to an embodiment.
FIGS. 21 to 24 illustrate an example of a communication system 1 and wireless devices applied to the disclosure.
FIG. 25 illustrates an exemplary discontinuous reception (DRX) operation applicable to the disclosure.

**DETAILED DESCRIPTION**

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if," "in a case," or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

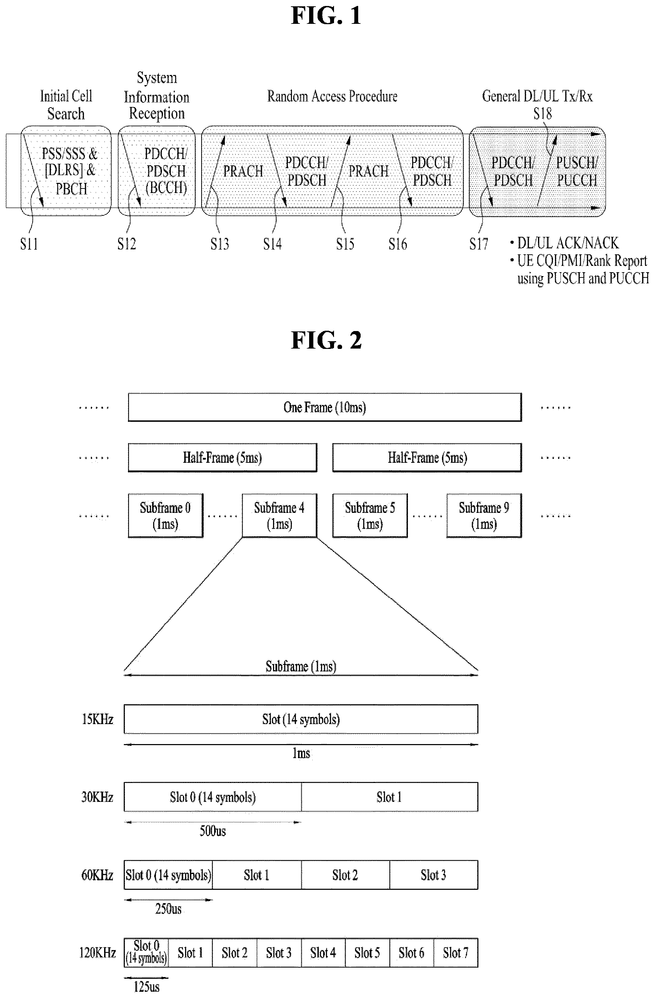

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |

(continued)

| SCS (15*2$^u$) | N$^{slot}_{symb}$ | N$^{frame,u}_{slot}$ | N$^{subframe,u}_{slot}$ |
|---|---|---|---|
| 60KHz (u=2) | 14 | 40 | 4 |
| 120KHz (u=3) | 14 | 80 | 8 |
| 240KHz (u=4) | 14 | 160 | 16 |
| * N$^{slot}_{symb}$: Number of symbols in a slot<br>* N$^{frame,u}_{slot}$: Number of slots in a frame<br>* N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

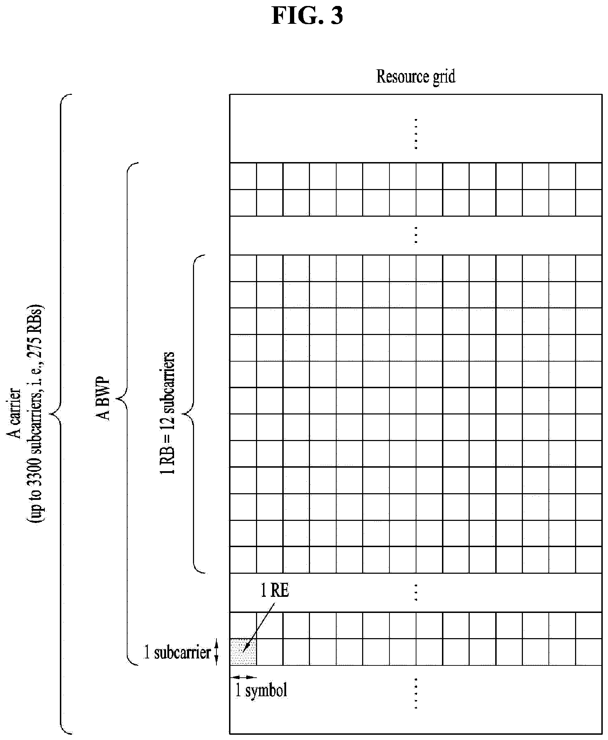

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

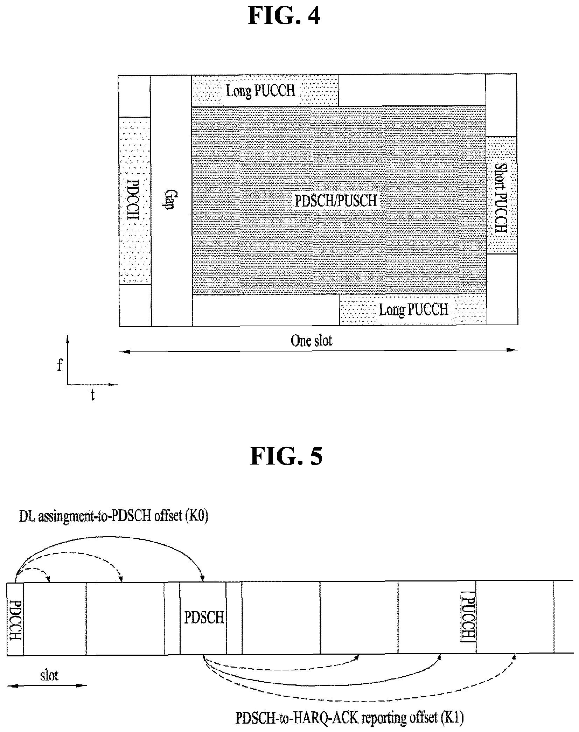

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There is a plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

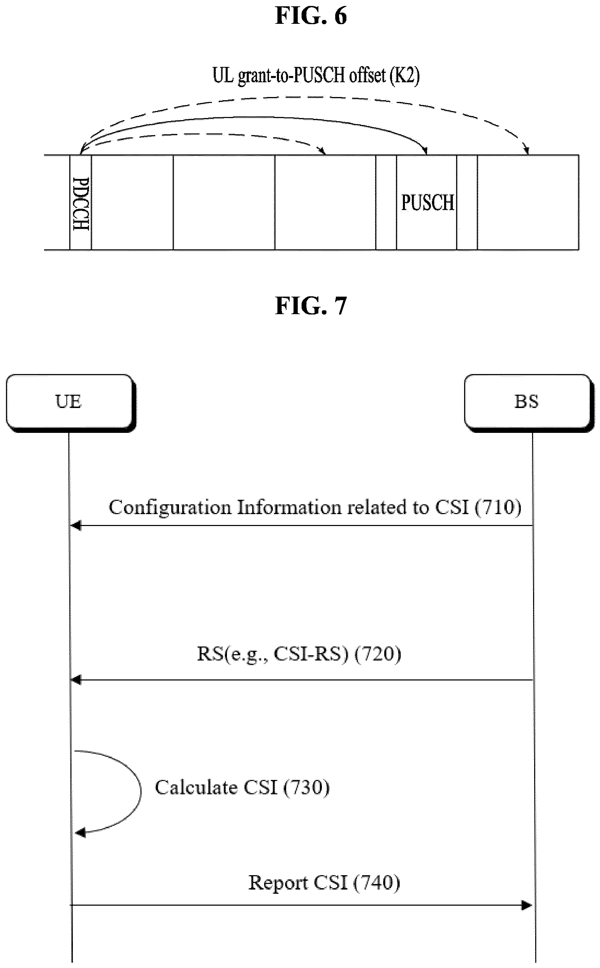

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semipersistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semipersistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semipersistent or aperiodic. The periodic CSI report may be transmitted on a PUCCH. The semipersistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks (e.g., PMI codebooks) defined in NR standards may be broadly divided into Type I codebooks and Type II codebooks. Type I codebooks primarily target Single User (SU)-MIMO, which supports both high order and low order. Type II codebooks may primarily support MI-MIMO, which supports up to two layers. Compared to Type I, Type II codebooks may provide more accurate CSI, but at the cost of increased signaling overhead. The Enhanced Type II codebook is intended to address the drawbacks of CSI overhead caused by the existing Type II codebook. The enhanced Type II is introduced by reducing the payload of the codebook in consideration of the correlation of the frequency axis.

CSI reporting on PUSCH may be configured as Part 1 and Part 2. Part 1 has a fixed payload size and is used to identify the number of information bits in Part 2. The entirety of Part 1 is transmitted before Part 2.

- For Type I CSI feedback, Part 1 contains the RI (if reported), CRI (if reported), and the CQI of the first codeword. Part 2 contains the PMI. When RI > 4, Part 2 includes the CQI.
- For Type II CSI feedback, Part 1 contains the RI (if reported), the CQI, and an indication of the number of non-zero WB amplitude coefficients per each layer of the Type II CSI. Part 2 contains the PMI of the Type II CSI.
- For Enhanced Type II CSI feedback, Part 1 contains the RI (if reported), the CQI, and an indication of the total number of non-zero WB amplitude coefficients for all layers of the Enhanced Type II CSI. Part 2 contains the PMI of the Enhanced Type II CSI.

When CSI reporting on PUSCH includes two parts, and the CSI payload to be reported is smaller than the payload size provided on the PUSCH resources allocated for CSI reporting, the UE may omit a portion of Part 2 CSI.

Semi-persistent CSI reporting performed in PUCH format 3 or 4 supports Type II CSI feedback, but only Part 1 of Type II CSI feedback.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

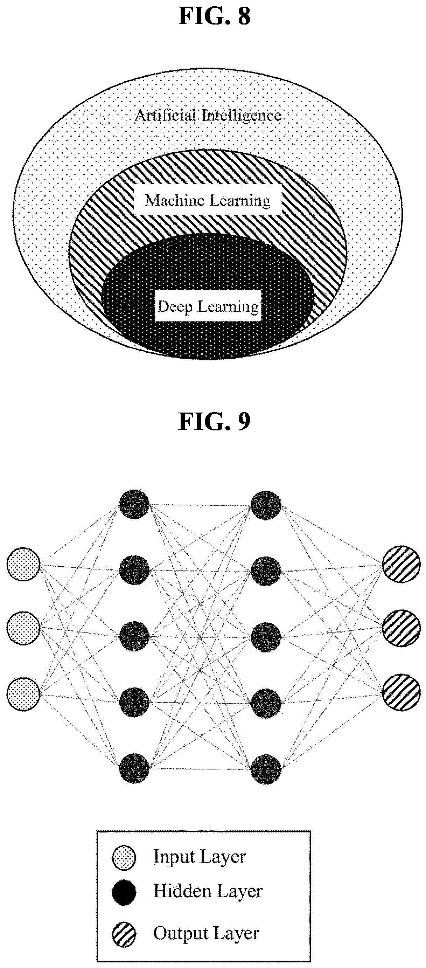

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used. In most situations, offline learning is used. With offline learning, the system does not learn incrementally; learning is performed using all available collected data and applied to the system without further learning. If learning on new data is necessary, learning may begin again using the new entire data set.

(2) Online Learning: Online learning is a method of improving performance little by little by incrementally learning with additionally generated data based on the fact that data to be used for learning is continuously generated recently through the Internet. Learning is performed in real time per (batch) of specific data collected online, allowing the system to be quickly adapted to changing data.

To build an AI system, only online learning may be used and learning may be performed using only real-time data. Alternatively, offline learning may be performed using a predetermined set of data, and then additional learning may be performed using additional real-time data (online + offline learning).

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.

(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/-weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.

(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.

(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.

(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

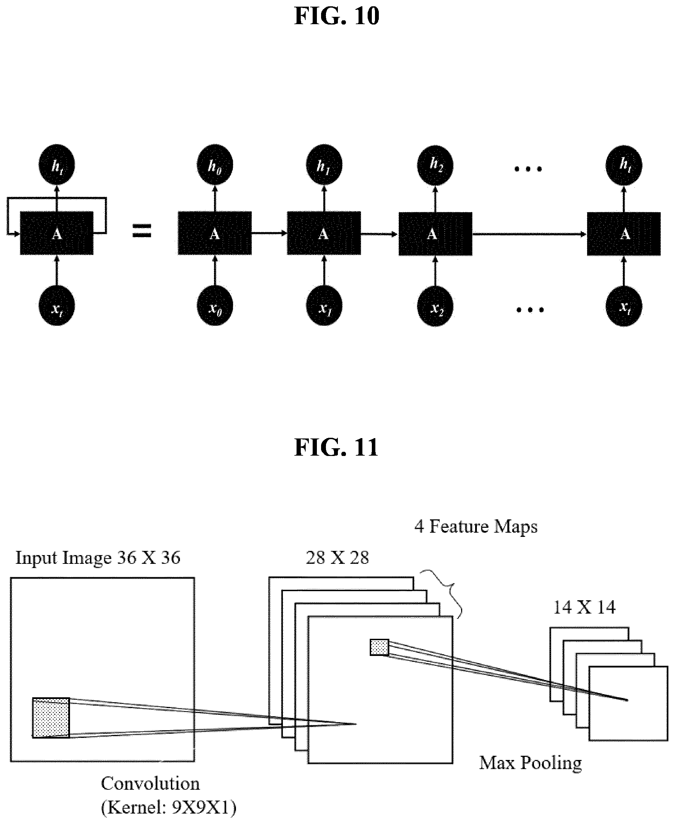

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added. In FIG. 10, A denotes a neural network, $x_t$ denotes an input value, and ht denotes an output value. Here, ht may refer to a state value representing the current time, and $h_{t-1}$ may refer to a previous state value.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. The kernel (or filter) may be changed by learning. A stride is a movement range in which the kernel is moved within the input. A feature map is the result of applying a kernel to an input. Padding refers to a value added to adjust the size of the feature map. Multiple feature maps may be extracted to induce robustness to distortions, changes, etc. Pooling refers to computation (e.g., max pooling or average pooling) to reduce the size of the feature map by downsampling the feature map.

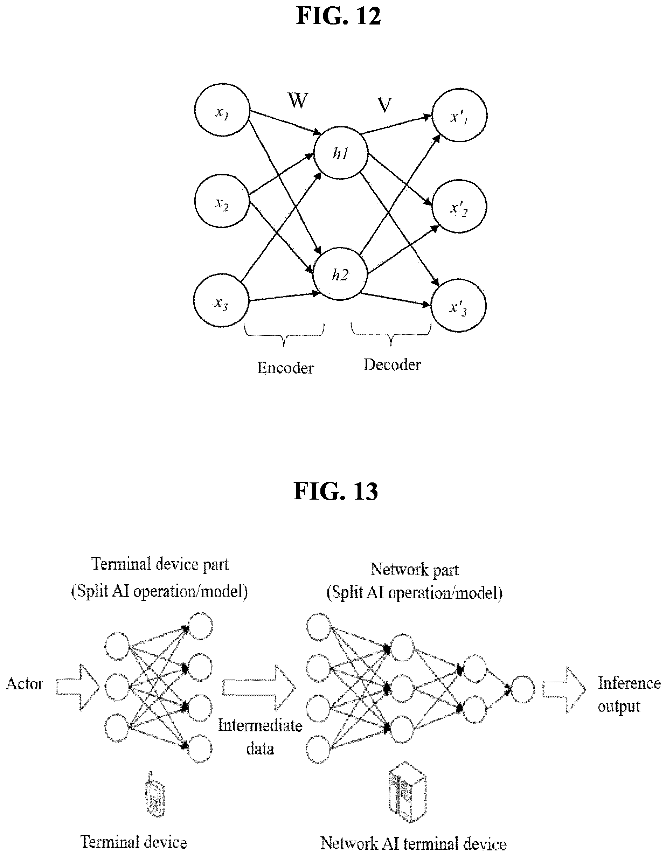

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. Since the auto-encoder reconstructs the input, the output may be referred to as reconstruction. A loss function may be represented according to Equation 1 below.

$$[\text{Equation 1}]$$

$$\arg \min_{W,V} \left\| x - g(f(x)) \right\|^2 , where \ \mathbf{h} = \mathrm{f}(\mathbf{x}) = \mathbf{Wx}, \mathbf{x}' = \mathrm{g}(\mathbf{h}) = \mathbf{Vh}$$

The loss function of the auto encoder illustrated in FIG. 12 is calculated based on the difference between the input and output, and the loss of the input is determined based on the loss of the input, and the auto encoder performs optimization to minimize the loss.

FIG. 13 is a diagram illustrating split AI inference.

Fig. 13 illustrates a split AI operation. In particular, it illustrates a case where the Model Inference function is performed in cooperation between an end device such as a UE and a network AI/ML endpoint.

In addition to the model inference function, each of the model training function, actor, and data collection function may be split into multiple parts depending on the current task and environment, and may be performed by cooperation of multiple entities.

For example, computation-intensive and energy-intensive parts may be performed on the network endpoint, while privacy-sensitive and delay-sensitive parts may be performed on the end device. In this case, the end device may execute the task/model from the input data to a specific part/layer, and then transmit the intermediated data to the network endpoint. The network endpoint executes the remaining parts/layers and provides the results of the inference outputs to one or more devices that perform the operation/task.

Next, a functional framework for AI operation is described.

In the following, terms used for a more specific description of AI (or AI/ML) may be defined as follows

- Data collection: Data collected from network nodes, management entities, or UEs, etc. as the basis for AI model training, data analysis, and inference.
- AI model: A data driven algorithm that applies AI techniques to generate a set of outputs containing predictive information and/or decision parameters, based on a set of inputs.
- AI/ML training: An online or offline process of training an AI model by learning functions and patterns that best represent the data and acquire a trained AI/ML model for inference.

- AI/ML Inference: A process of predicting or guiding decisions based on the data collected using the trained AI model and the AI model.

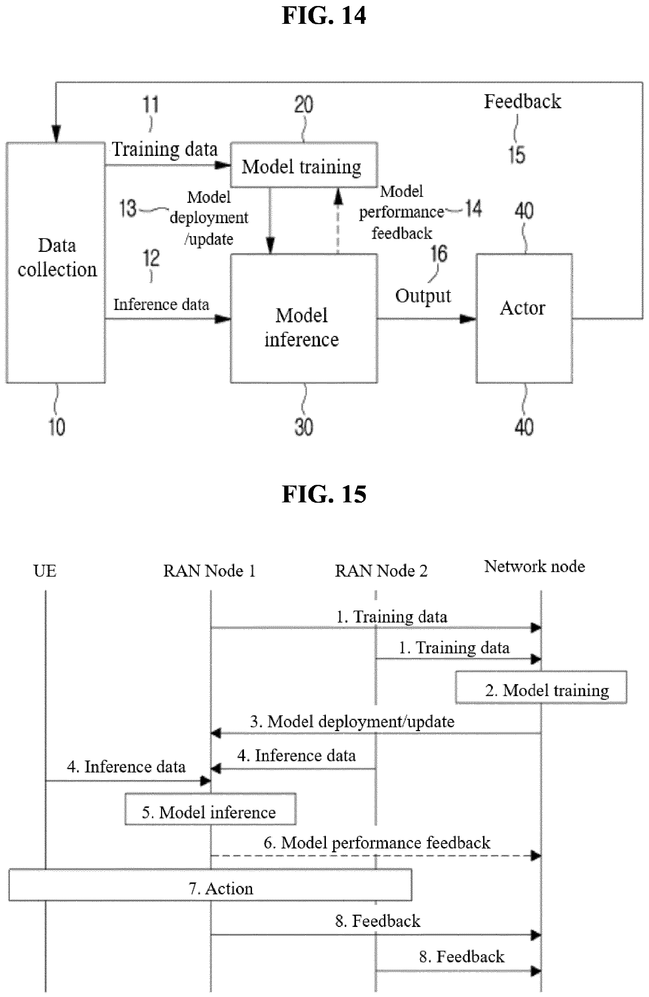

Referring to FIG. 14, the data collection 10 is a function that collects input data and provides the processed input data to the model training function 20 and the model inference function 30.

Examples of input data may include measurements from UEs or other network entities, feedback from actors, and output from an AI model.

The data collection function 10 performs data preparation based on the input data, and provides the input data processed by the data preparation. Here, the data collection function 10 does not perform specific data preparation (e.g., data pre-processing and cleaning, forming, and transformation) for each AI algorithm, but may perform data preparation common to the AI algorithms.

After performing the data preparation, the model training function 10 provides the training data 11 to the model training function 20 and the inference data 12 to the model inference function 30. Here, the training data 11 is the data required as input for the AI model training function 20. The Inference data 12 is the data required as input for the AI model inference function 30.

The data collection function 10, which may be performed by a single entity (e.g., UE, RAN node, network node, etc.), may be performed by multiple entities. In this case, the training data 11 and inference data 12 from a plurality of entities may be provided to the model training function 20 and the model inference function 30, respectively.

The model training function 20 is part of an AI model testing procedure, and performs AI model training, validation, and testing that may generate model performance metrics. The model training function 20 is also responsible for data preparation (e.g., data pre-processing and cleaning, forming and transformation) based on the training data 11 provided by the data collection function 10, when necessary.

Here, the model deployment/update function 13 is used to initially deploy the trained, validated and tested AI model to the model inference function 30 or to provide the updated model to the model inference function 30.

The model inference function 30 is a function that provides an AI model inference output 16 (e.g., a prediction or decision). The model inference function 30 may provide model performance feedback 14 to the model training function 20, if applicable. The model inference function 30 is also responsible for data preparation (e.g., data pre-processing and cleaning, forming and transformation) based on the inference data 12 provided by the data collection function 10, when necessary.

Here, the output 16 refers to the inference output of the AI model generated by the model inference function 30, and the details of the inference output may vary depending on the use case.

The model performance feedback 14 may be used for monitoring the performance of the AI model if available. This feedback may be omitted.

The actor function 40 is a function that receives the output 16 from the model inference function 30 and triggers or performs a corresponding task/operation. The actor function 40 may trigger a task/operation for another entity (e.g., one or more UEs, one or more RAN nodes, one or more network nodes, etc.) or for itself.

The feedback 15 may be used to derive the training data 11 and inference data 12, or to monitor the performance of the AI model, an impact on the network, etc.

The definitions of training/validation/test in the data set used in AI/ML may be distinguished as follows.

- Training data: A data set for training the model.
- Validation data: A data set used to validate a model that has already been trained, usually to prevent over-fitting of the training data set.

It also refers to a data set for selecting the best model among several models trained in the process of training. Therefore, it may also be considered a form of training.

- Test data: A data set for final evaluation. This data is unrelated to training.

In the case of the above data set, in general, if the training set is divided, the training data and validation data may be divided at 8:2 or 7:3 within the entire training set. If the test is also included, they may be divided at 6:2:2 (training: validation: test).

Depending on whether the AI/ML function between the BS and the UE is capable, the collaboration level may be defined as follows. Variations are possible due to the combination of multiple levels or the separation of any one level.

Cat 0a) No collaboration framework: AI/ML algorithms are purely implementation-based and do not require any changes to the air interface.

Cat 0b) This level corresponds to a framework that involves a modified air interface for efficient implementation-based AI/ML algorithms, but no collaboration.

Cat 1) Involves inter-node support to improve the AI/ML algorithm of each node. This applies to cases where the UE receives support from the gNB (for training, adaptation, etc.) and vice versa. No model exchange between network nodes is required at this level.

Cat 2) A joint ML operation between the UE and the gNB may be performed. This level requires AI/ML model commands or exchange between network nodes.

The functions previously described with reference to FIG. 14 may be implemented in RAN nodes (e.g., BSs, TRPs, central units (CUs) of the BSs, etc.), network nodes, network operator's operation administration maintenance (OAM), or UEs.

Alternatively, two or more entities among the RAN, a network node, a network operator's OAM, or a UE may collaborate to implement the functions illustrated in FIG. 14. For example, one entity may perform some of the functions in FIG. 14, and another entity may perform the remaining functions. As such, as some of the functions illustrated in FIG. 14 are performed by a single entity (e.g., UE, RAN node, network node, etc.), delivery/provision of data/information between the functions may be omitted. For example, when the model training function 20 and the model inference function 30 are performed by the same entity, the model deployment/update 13 and the delivery/provision of the model performance feedback 14 may be omitted.

Alternatively, any of the functions illustrated in FIG. 14 may be performed in collaboration by two or more entities among the RAN, network node, network operator's OAM, or UE. This may be referred to as a split AI operation.

FIG. 15 illustrates a case where the AI model training function is performed by a network node (e.g., a core network node, a network operator's OAM, etc.) and the AI model inference function is performed by a RAN node (e.g., a BS, a TRP, a CU of the BS, etc.).

Step 1: RAN node 1 and RAN node 2 transmit input data (i.e., training data) for AI model training to the network node. Here, RAN node 1 and RAN node 2 may transmit to the network node data collected from the UE (e.g., measurements of the UE related to RSRP, RSRQ, and SINR of the serving cell and neighbor cells, location of the UE, speed, etc.)

Step 2: The network node trains the AI Model based on the received training data.

Step 3: The network node deploys/updates the AI model to RAN node 1 and/or RAN node 2. RAN node 1 (and/or RAN node 2) may continue to train the model based on the received AI Model.

For simplicity of description, assume that the AI Model is deployed/updated to RAN node 1 only.

Step 4: RAN node 1 receives input data for AI model inference (i.e., inference data) from the UE and RAN node 2.

Step 5: RAN node 1 performs AI model inference based on the received inference data and generates output data (e.g., a prediction or decision).

Step 6: If applicable, RAN node 1 may transmit model performance feedback to the network node.

Step 7: RAN node 1, RAN node 2, and the UE (or 'RAN node 1 and UE', or 'RAN node 1 and RAN node 2') perform an action based on the output data. For example, if the action is load balancing, the UE may move from RAN node 1 to RAN node 2.

Step 8: RAN node 1 and RAN node 2 transmit feedback information to the network nodes.

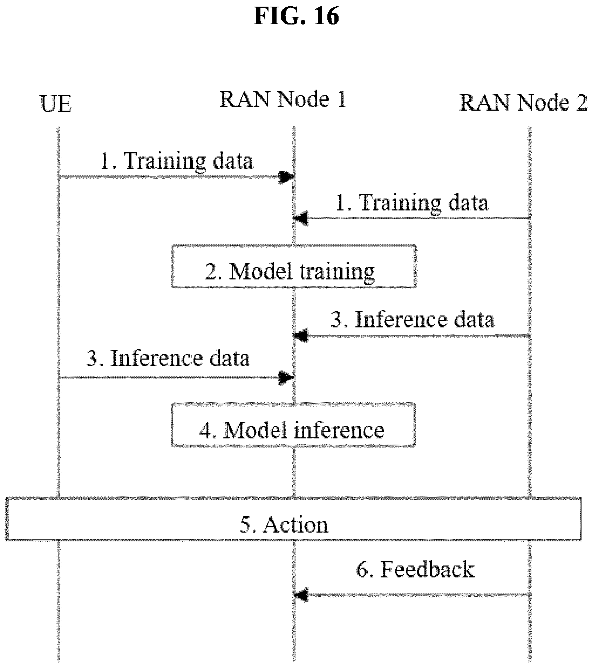

FIG. 16 illustrates a case where both the AI model training function and the AI model inference function are performed by a RAN node (e.g., a BS, a TRP, a CU of the BS, etc.).

Step 1: The UE and RAN node 2 transmit input data (i.e., training data) for AI model training to RAN node 1.

Step 2: RAN node 1 trains the AI model based on the received training data.

Step 3: RAN node 1 receives input data for AI model inference (i.e., Inference data) from the UE and RAN node 2.

Step 4: RAN node 1 performs AI model inference based on the received inference data and generates output data (e.g., a prediction or decision).

Step 5: RAN node 1, RAN node 2, and the UE (or 'RAN node 1 and the UE', or 'RAN node 1 and RAN node 2') perform an action based on the output data. For example, if the action is load balancing, the UE may move from RAN node 1 to RAN node 2.

Step 6: RAN node 2 transmits feedback information to RAN node 1.

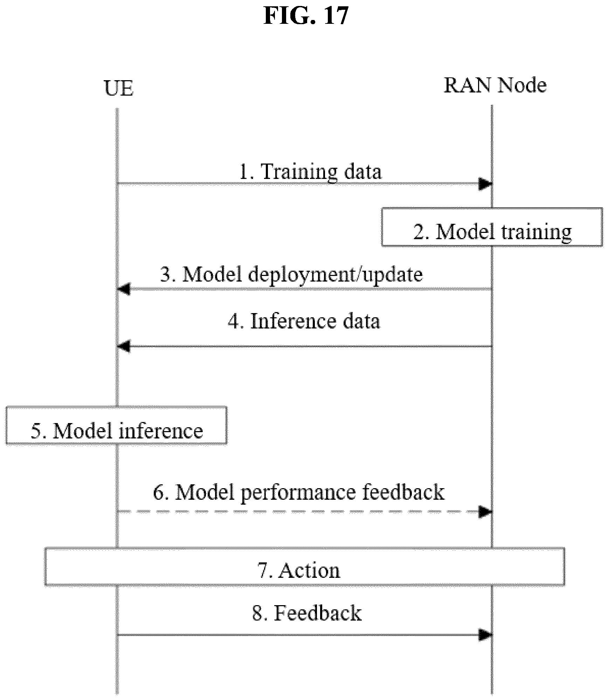

FIG. 17 illustrates a case where the AI model training function is performed by a RAN node (e.g., a BS, a TRP, a CU of the BS, etc.) and the AI model inference function is performed by a UE.

Step 1: The UE transmits input data (i.e., training data) for AI model training to the RAN node. Here, the RAN node may collect data (e.g., UE measurements related to RSRP, RSRQ, and SINR of the serving cell and neighbori cells, UE location, speed, etc.) from various UEs and/or from other RAN nodes.

Step 2: The RAN node trains the AI model based on the received training data.

Step 3: The RAN node deploys/updates the AI model to the UE. The UE may continue to train the model based on the received AI model.

Step 4: The UE receives input data for AI model inference (i.e., inference data) from the RAN node (and/or from other UEs).

Step 5: The UE performs AI model inference based on the received inference data and generates output data (e.g., a prediction or decision).

Step 6: If applicable, the UE may transmit model performance feedback to the RAN node.

Step 7: The UE and the RAN node perform an action based on the output data.

Step 8: The UE transmits feedback information to the RAN node.

## Enhanced line of sight (LoS) indication method based on AI/ML

Hereinafter, an LoS indication method to improve accuracy and resource efficiency in AI/ML-based positioning is proposed.

Currently, the standardization of NR Rel-18 has discussed improvements in CSI feedback (e.g., overhead reduction, improved accuracy, prediction), beam management (e.g., beam prediction in time, and/or spatial domain for overhead and latency reduction, and beam selection accuracy improvement), and improved positioning accuracy (e.g., heavy non-line of sight (NLoS) conditions) in relation to AI/ML.

Regarding improving positioning accuracy, a non-LoS aspect compared with a scenario considered in the existing Rel-17 positioning enhancement may be further strengthened, thereby improving the accuracy performance for UE position measurement through AI/ML-based positioning schemes in such environments. Various methods to achieve this have been discussed, and LoS/NLoS indication has emerged as a major potential sub-use case.

LoS/NLoS indication is introduced in Rel-17, and the UE may report LoS/NLoS for each PRS resource or target TRP to the BS/LMF with a value of 0 to 1. The corresponding value is determined depending on an implementation method of the UE, and the LoS/NLoS information for each PRS resource/TRP measured and reported from the UEs for each location may be obtained from the LMF. In this case, the information about the LoS/NLoS is determined by implementation of the UE, and thus the reliability thereof varies for each UE, and thus a problem also arises when the location of a target UE is calculated using this. That is, it is currently difficult to ensure reliability for the LoS/NLoS indication value itself, and thus there are bound to be limitations in terms of improving positioning accuracy by using this. In addition to improving positioning accuracy, the efficiency aspect of setting up and utilizing PRS resources is also one of the key performance metrics that need to be considered.

Therefore, in this specification, a method to increase reliability by utilizing AI/ML on the UE and/or LMF side for LoS/NLoS indication values and a method to improve performance in terms of positioning accuracy and resource efficiency by using LoS/NLoS information calculated through AI/ML are proposed.

## Proposal 1. Method for improving reliability of LoS/NLoS information through AI/ML model in terms of UE/UE

UE-side: When AI/ML schemes are applied in terms of a UE, parameters that affect the capability and LoS estimation of the UE are used as input values for the AI/ML model, and an LoS/NLoS probability value for a first arrival path and/or a reliability conversion value for the calculated LoS indication value are derived as output.

Network-side: In terms of the BS, the measurement results, LoS indication values, and/or reliability conversion values collected from a plurality of UEs are used as inputs for the BS AI/ML model for training, and feedback information related to the accuracy of the LoS indication values reported by the UE at a specific location is provided to the UE.

Proposal 1 describes a method to derive LoS/NLoS information or improve its reliability when operating by applying an AI/ML model on the UE/BS side.

First, to improve LoS/NLoS reliability through AI/ML schemes on the UE side, this may be performed by utilizing capabilities such as the antenna configuration of the UE and various parameters. In this case, examples of input parameters of the UE may be considered, such as the capability of the UE for PRS measurement, whether AI/ML model for LoS estimation is installed, whether a PRU is present, the number of PRS measurement inputs, and noise variance information. In this case, in the case of a low-end device in which the reliability conversion value (e.g. mean and/or variance for LOS probability) for the LoS indicator calculated through the input parameters, or the like is below a specific value or does not satisfy a specific criterion as an input parameter, a report on the LoS probability value may not be expected. The UE may report the reliability conversion value to the BS along with the LoS indication value as AI assistance information, and the BS/LMF that receives the information may use this to calculate the location of the UE. Assistance information may be related to the reliability of UE location estimation.

Then, on the BS side, measurement results/LoS indication values and/or reliability conversion values (AI assistance information) collected from a plurality of UEs may be trained (as input to the BS/AI/ML model, or the like). In this case, feedback may be provided to the UE regarding the accuracy of the LoS indication value reported by the UE at a specific location or a degree to which the indication value is over- or under-estimated. In this case, an LoS/NLoS environment may be different for each TRP, and the value of the LoS/NLoS indication reported by the UE is reported for at least each TRP, and thus feedback information on the LoS/NLoS indication may be provided to include TRP/PRS resource set/PRS resource ID information. The corresponding feedback allows the UE to utilize the information for subsequent LoS/NLoS indication calculation and reporting. The granularity (currently 0.1 units) of the LOS indication of the UE may be changed or the granularity set may be instructed to be updated. Alternatively, the accuracy of the probability value may be improved by controlling an output node of the UE. As an example, for the existing LoS indication values of [0.1, 0.2, ..., 1], the granularity may be adjusted in increments of 0.05 or the granularity may be changed within a specific range. (e.g. [0.1, 0.2 ..., 0.8, 0.85, 0.9, 0.95, 1] )

When the LMF trains LoS/NLoS information and derives inference, additional information may be required on a processing time required and the feedback of information reported by the UE at a certain point in time, depending on a measurement reporting cycle of the UE. For example, when another measurement is reported from the UE while the LMF reports the measurement results and attempts to provide feedback thereon, it may be ambiguous for the UE as to when the feedback from the LMF is calculated. To resolve this, the ambiguity problem may be resolved by using time information such as HARQ ID or time stamp to indicate which report information of the UE is feedback in terms of the LMF.

### Proposal 2. Additional LoS/NLoS information for a plurality of PRSs of a UE is reported and used to estimate LoS indication.

For example, through UE mobility prediction on the BS/UE side, probability values or probability change values at specific time instances for the plurality of LoS components may be additionally reported.

For Proposal 2, while LoS information of the first arrival path, which is the current operation, is reported, the UE may perform reporting by adding LoS information for a plurality of arrival paths, such as second and/or third arrival paths. In this case, the reliability of LoS information may be improved by performing a soft decision method that combines LoS information of various paths to determine the LoS indication, rather than the existing hard decision method. In addition, through UE mobility prediction on the BS/UE side, probability values or probability change values at specific time instances for the plurality of LoS components may be additionally reported.

### Proposal 3. PRS setting is performed based on relevance of LoS probability and PRS through feedback of LoS/NLoS instructions in Proposals 1/2 above.

Proposal 3 allows the BS to collect/process (via AI/ML model) the values for the LoS degree at a specific location obtained from a plurality of UEs through Proposals 1/2 above, and through this, to determine which PRS resource has a high LoS probability for a specific UE in the form of a boundary in a coordinate system supporting the UE. The information may be used to adaptively set PRS settings for the location of a specific UE. For example, the UE may be configured to measure and report only PRS resources with a LoS probability of 0.7 or higher. Alternatively, as in the example above, the reporting operation may be performed by instructing that reporting be performed with priority given to a PRS resource with a high LoS probability value from among PRS resources of which LoS probability value does not exceed a specific value such as 0.7. UE-based positioning may also report on use of the corresponding AI/ML scheme. That is, whether an actual position estimate value of the UE is the result of direct AI/ML positioning or whether the LoS information is utilized as intermediate information for estimating the actual UE location as a method of AI/ML assisted positioning may be reported by using the LoS information derived through the proposals of the present disclosure, and the LMF that collects the corresponding information may use the information as side information for positioning accuracy.

When the LoS probability is determined to be low in an area or when the LoS probability is determined to be low in a specific PRS resource(s), another AI/ML algorithm may be used to improve the positioning accuracy in NLoS situations. That is, for PRS resources with a LoS probability below a certain value, it is determined to be an NLoS situation and AI/ML may be additionally/separately performed for this. In an NLoS situation, an AI/ML algorithm may be used to compare the estimated UE location with the actual UE location and to correct the measurement information reported by the UE in the NLoS situation such that the UE location may be estimated later closer to the actual location.

As in Proposal 3 above, through feedback on LoS/NLoS instructions, it may be possible to determine which PRS resource(s) have a high LoS probability for a specific UE in specific areas on a coordinate system supporting the UE. When the corresponding method is extended to a situation of multi-TRP construction, which is currently considered in Rel-18 AI/ML positioning, PRS configuration may be possible based on an intermediate or related output of LoS/NLoS indication for each TRP. Here, MTRP construction means that an input to the AI/ML model includes N(>1) TRPs and channel measurement sets between the target UE, and an output is expressed as N sets of values according to the scheme. As such, if PRS settings are made for each TRP (via LoS indication and probability information), when a UE receives a plurality of PRSs transmitted from each TRP, a problem occurs in which power of PRS(s) from a specific TRP(s) is relatively strong due to the near-far problem between the plurality of TRPs and the UE, and the remaining PRSs are not detected, except for the specific PRS(s). When PRSs with LoS characteristics are configured, there may be an advantage in terms of positioning accuracy, but due to the strong signal strength of specific TRPs/PRSs, called the near-far problem, a problem occurs in which PRSs with relatively weak reception signal power, excluding the PRS(s), are not detected by the UE. In particular, the PRSs set from each TRP may be determined to have a high probability of guaranteed LoS with the corresponding UE, and thus it may be determined that this problem affects the performance more frequently/significantly compared to the existing positioning scheme. To resolve this problem, a method to set PRS muting sequence, length, PRS subframe offset, and/or PRS transmission power when setting PRS between TRPs (based on LoS indication and probability information) considering MTRP construction is proposed.

**Proposal 4. Method for setting PRS and transmission power for each TRP in MTRP construction based on relevance of LOS probability and PRS through feedback of LoS/NLoS instructions such as Proposal 3**

Option 1) Setting PRS transmission power based on absolute/relative distance between a plurality of TRPs and UEs based on specific location of UE.

Option 2) Method of setting PRS muting pattern when PRS is set for each TRP (PRS muting sequence, length, PRS subframe offset, or the like)

- When the UE may additionally report LoS information for a plurality of arrival paths in addition to the LoS information for a first arrival path, a PRS muting pattern/sequence may be set based on a plurality of LoS components.

In this case, through the UE location and related location change information expected based on measurement of the UE,

- the TRPs may configure, as a subset, TRP(s) on which operations of Options above are performed, and operate. That is, the PRS muting pattern/transmission power may be set based on a subset of TRPs, such as n (<N) TRPs, or TRPs that are close to the UE from among N TRPs depending on specific conditions.
- The number of PRSs based on LoS information with the UE for each TRP may be set to be the same or different.

The Options above may be applied individually or simultaneously to the MTRP PRS configuration.

Proposal 4 describes a method for setting muting patterns and transmission power for each TRP when setting UEs and PRSs with LoS based on LoS indication and related probability information through LoS/NLoS identification through AI/ML (assisted) positioning. For Option 1, it means controlling the transmission power when transmitting the PRS set for each TRP corresponding to the MTRP construction. In this case, the PRSs transmitted from each TRP may be adjusted for each TRP such that the TRPs are at relatively the same level when received by the UE, or the power level may be adjusted by considering only the TRP(s) that are relatively close to the UE. For this signaling method, the UE may report power limitation-related information for specific TRP(s) to the BS (as assistance information) based on the measurement results of the PRS for each TRP. The UE may select and report one of a plurality of power attenuation candidate values set by a UE or a BS. Alternatively, when power reduction of a specific TRP(s) is required at an LMF end that receives the PRS measurement reporting of the UE, the corresponding information may be transmitted to the BS and performed. For Option 2, excluding a power aspect for PRS transmission, it means that detection performance for a plurality of PRSs is improved through muting for each TRP for corresponding PRSs when the PRSs are transmitted based on the power determined by each TRP. This may determine the muting pattern, duration, offset, and the like of PRSs set based on LoS indication based on RSRP report for each PRS of the UE. In addition, the UE may be utilized when designing muting patterns based on feedback of information related to reporting or estimation of multiple arrival paths, such as second/third arrival paths, in addition to the first arrival path, through AI/ML, or the like. Based on measurement of the UE through a plurality of TRPs, the expected location and expected location change information of the UE may be made available to the BS or UE (via assistance signaling/feedback). Based on this, it may be possible to set up and report UEs for a subset that considers only specific n (n<N) TRPs due to the expected location or location change of the UE, rather than all N TRPs considered for MTRP construction.

According to embodiments of the present specification, the reliability of LoS/NLoS indication may be improved through an AI/ML model, and the overall positioning accuracy may be improved through the improved reliability of LoS/NLoS, and resource allocation for positioning may be optimized, such that resource use may be performed more efficiently.

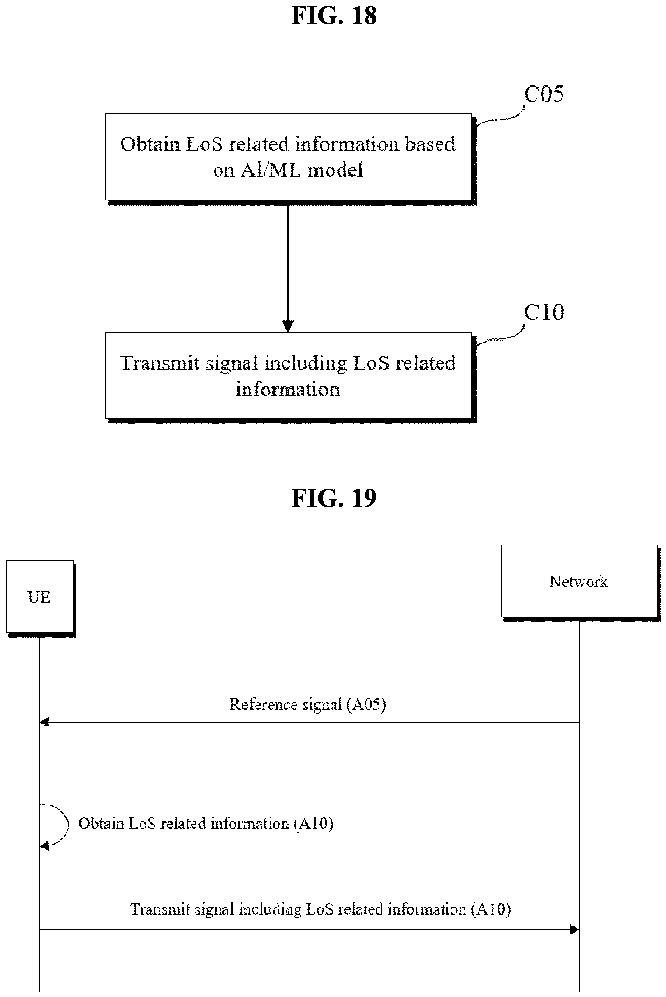

FIG. 18 is a diagram for explaining a device operation according to an embodiment.

Referring to FIG. 18, the device may obtain light of sight (LoS) related information regarding at least one reference signal for positioning based on an AI/ML (artificial intelligence/machine learning) model (C05).

The device may transmit a signal including the LoS related information (C10).

The LoS related information may include information on the reliability of determination by the AI/ML model regarding whether each reference signal is provided via LoS or non-line of sight (NLoS).

The reliability information may include the LoS probability calculated by the AI/ML model.

The LoS related information may be provided individually for each of the at least one reference signal.

The LoS related information may be provided individually for each arrival path of each reference signal.

The LoS related information may be provided for a reference signal having a LoS probability equal to or greater than a threshold.

Based on the LoS related information, reference signal configuration to be used for positioning may be determined.

Based on the LoS related information, at least one of a reference signal transmission power and a reference signal muting pattern may be determined.

The reference signal transmission power and the reference signal muting pattern may be determined for each transmission reception point (TRP).

The device may be a user equipment (UE), a transmission reception point (TRP), a BS or a network node related to positioning.

For example, the device may be a user device (UE) as shown in FIG. 19. Referring to FIG. 19, the UE may receive at least one reference signal for positioning from a network (A05). The UE may measure at least one received reference signal. The UE may obtain LoS related information based on measurements of reference signals and AI/ML models (A10) and report this to the network (A10).

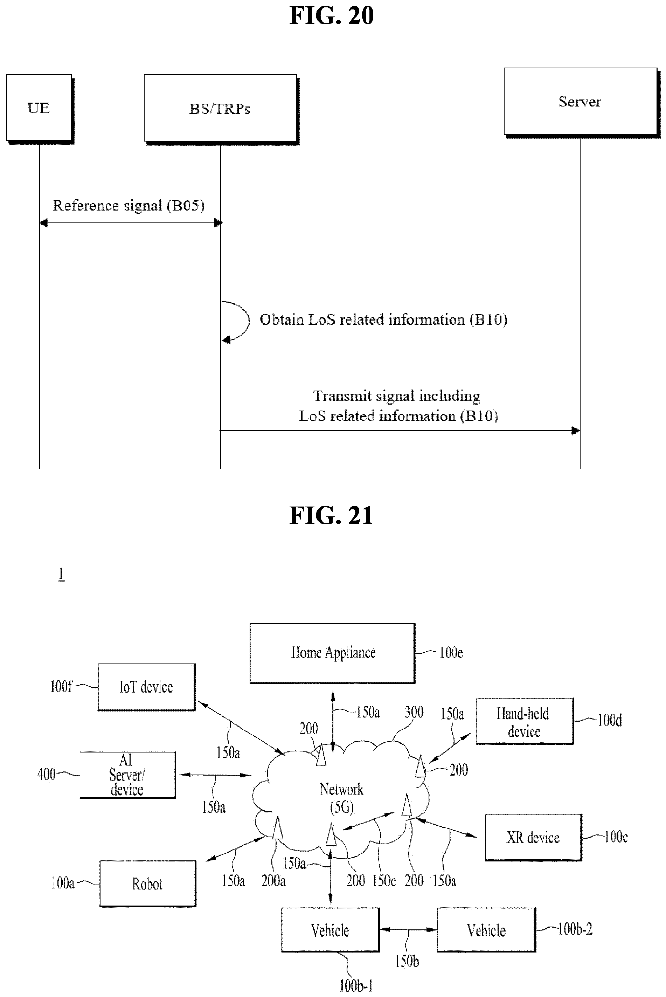

For example, the device may be a BS/TRP(s) as in FIG. 20. Referring to FIG. 19, the BS/TRP(s) may transmit and/or receive at least one reference signal for positioning to the UE (B05). For example, the BS/TRP(s) may transmit at least one DL reference signal for positioning to the UE and receive a measurement result thereof from the UE. Alternatively, the BS/TRP(s) may receive and measure at least one UL reference signal for positioning from the UE.

The BS/TRP(s) may obtain LoS related information based on measurements of reference signals and AI/ML models (B 10) and transmit a signal including the information to a network server (B10).

FIG. 21 illustrates a communication system 1 applied to the disclosure.

Referring to FIG. 21, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

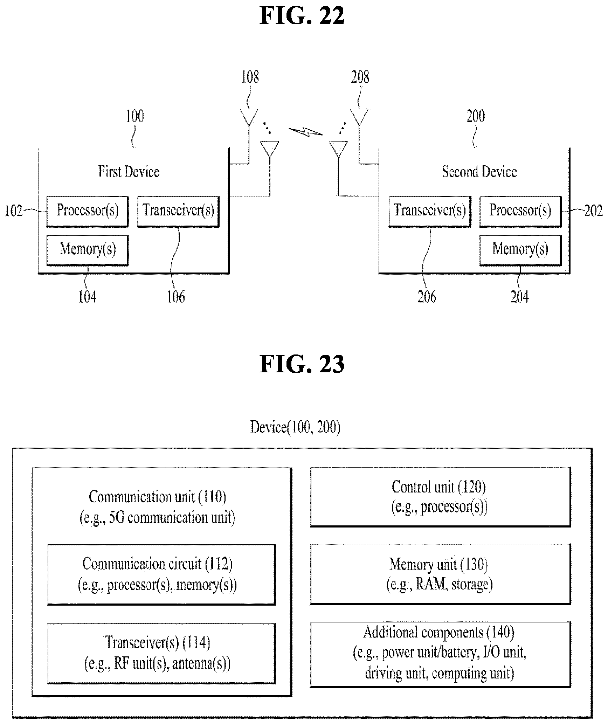

FIG. 22 illustrates wireless devices applicable to the disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 23 illustrates another example of a wireless device applied to the disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

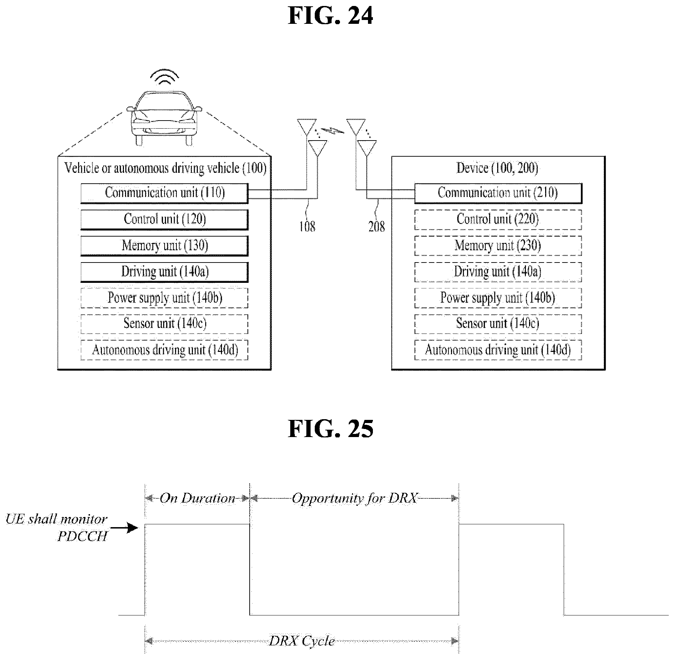

FIG. 24 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 25 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 25, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The disclosure is applicable to UEs, BSs, or other apparatuses in a wireless mobile communication system.

**Claims**

1. A method of operating a device in a wireless communication system, the method comprising:

    obtaining light of sight (LoS) related information regarding at least one reference signal for positioning based on an artificial intelligence/machine learning (AI/ML) model; and
    transmitting a signal including the LoS related information,
    wherein the LoS related information includes information regarding reliability of determination by the AI/ML model regarding whether each reference signal is provided via LoS or non-line of sight (NLoS).

2. The method of claim 1, wherein the information regarding reliability includes an LoS probability calculated by the AI/ML model.

3. The method of claim 1, wherein the LoS related information is provided individually for each of the at least one reference signal.

4. The method of claim 1, wherein the LoS related information is provided individually for each arrival path of each reference signal.

5. The method of claim 1, wherein the LoS related information is provided for a reference signal having a LoS probability equal to or greater than a threshold.

6. The method of claim 1, wherein a reference signal configuration to be used for positioning is determined based on the LoS related information.

7. The method of claim 1, wherein at least one of a reference signal transmission power and a reference signal muting pattern is determined based on the LoS related information.

8. The method of claim 7, wherein the reference signal transmission power and the reference signal muting pattern are determined for each transmission reception point (TRP).

9. The method of claim 1, further comprising:
    receiving the at least one reference signal for positioning.

10. The method of claim 1, wherein the device is a user equipment (UE), a transmission reception point (TRP), a base station (BS) or a network node related to positioning.

11. A computer-readable recording medium having recorded thereon a program for performing the method of claim 1.

12. A device for wireless communication, the device comprising:

a memory configured to store instructions; and
a processor configured to perform operations by executing the instructions,
wherein the operations of the processor comprise:

obtaining light of sight (LoS) related information regarding at least one reference signal for positioning based on an artificial intelligence/machine learning (AI/ML) model; and
transmitting a signal including the LoS related information, and
wherein the LoS related information includes information regarding reliability of determination by the AI/ML model regarding whether each reference signal is provided via LoS or non-line of sight (NLoS).

13. The method of claim 12, further comprising:
a transceiver configured to transmit or receive a radio signal under control of the processor.

14. The method of claim 12, wherein the device is a user equipment (UE), a transmission reception point (TRP), a base station (BS) or a network node related to positioning.

# FIG. 1

| Initial Cell Search | System Information Reception | Random Access Procedure | General DL/UL Tx/Rx S18 |
|---|---|---|---|
| PSS/SSS & [DLRS] & PBCH | PDCCH/ PDSCH (BCCH) | PRACH  PDCCH/ PDSCH  PRACH  PDCCH/ PDSCH | PDCCH/ PDSCH  PUSCH/ PUCCH |
| S11 | S12 | S13  S14  S15  S16 | S17 |

- DL/UL ACK/NACK
- UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot (14 symbols) |
|---|

1ms

30KHz

| Slot 0 (14 symbols) | Slot 1 |
|---|---|

500us

60KHz

| Slot 0 (14 symbols) | Slot 1 | Slot 2 | Slot 3 |
|---|---|---|---|

250us

120KHz

| Slot 0 (14 symbols) | Slot 1 | Slot 2 | Slot 3 | Slot 4 | Slot 5 | Slot 6 | Slot 7 |
|---|---|---|---|---|---|---|---|

125us

# FIG. 3

Resource grid

A carrier
(up to 3300 subcarriers, i.e., 275 RBs)

A BWP

1 RB = 12 subcarriers

1 RE

1 subcarrier

1 symbol

# FIG. 4

# FIG. 5

## FIG. 6

UL grant-to-PUSCH offset (K2)

PDCCH

PUSCH

## FIG. 7

UE

BS

Configuration Information related to CSI (710)

RS(e.g., CSI-RS) (720)

Calculate CSI (730)

Report CSI (740)

# FIG. 8

# FIG. 9

| | |
|---|---|
| ⊙ | Input Layer |
| ● | Hidden Layer |
| ⊘ | Output Layer |

# FIG. 10

# FIG. 11

4 Feature Maps

Input Image 36 X 36

28 X 28

14 X 14

Convolution
(Kernel: 9X9X1)

Max Pooling

# FIG. 12

Encoder          Decoder

# FIG. 13

Terminal device part
(Split AI operation/model)

Network part
(Split AI operation/model)

Actor

Intermediate
data

Inference
output

Terminal device

Network AI terminal device

# FIG. 14

# FIG. 15

**FIG. 16**

# FIG. 17

UE                                                          RAN Node

1. Training data

2. Model training

3. Model deployment/update

4. Inference data

5. Model inference

6. Model performance feedback

7. Action

8. Feedback

# FIG. 18

C05

Obtain LoS related information based on AI/ML model

C10

Transmit signal including LoS related information

# FIG. 19

UE

Network

Reference signal (A05)

Obtain LoS related information (A10)

Transmit signal including LoS related information (A10)

# FIG. 20

# FIG. 21

# FIG. 22

# FIG. 23

Device(100, 200)

# FIG. 24

# FIG. 25

## INTERNATIONAL SEARCH REPORT

| International application No. |
|---|
| **PCT/KR2023/011207** |

**A.   CLASSIFICATION OF SUBJECT MATTER**

**H04W 64/00**(2009.01)i; **H04W 24/08**(2009.01)i; **G01S 5/02**(2010.01)i; **G06N 20/00**(2019.01)i

According to International Patent Classification (IPC) or to both national classification and IPC

**B.   FIELDS SEARCHED**

Minimum documentation searched (classification system followed by classification symbols)

H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI/ML, LoS, NLoS, 확률(probability), 뮤팅(muting)

**C.   DOCUMENTS CONSIDERED TO BE RELEVANT**

| Category* | Citation of document, with indication, where appropriate, of the relevant passages | Relevant to claim No. |
|---|---|---|
| X <br> Y | MODERATOR (ERICSSON). Final Summary of [109-e-R18-AI/ML-07] Email discussion on evaluation of AI/ML for positioning accuracy enhancement. R1-2205633, 3GPP TSG RAN WG1 Meeting #109-e. 25 May 2022. <br>    See pages 6, 86, 93, 95, 115, 120 and 127; and figure 1. | 1-6,9-14 <br> 7-8 |
| Y | MODERATOR (VIVO). Discussion summary #1 of [109-e-R18-AI/ML-08]. R1-2205229, 3GPP TSG RAN WG1 Meeting #109-e. 18 May 2022. <br>    See page 5. | 7-8 |
| A | QUALCOMM INCORPORATED. Evaluation on AI-ML for positioning accuracy enhancement. R1-2205028, 3GPP TSG RAN WG1 #109-e. 29 April 2022. <br>    See pages 1-13. | 1-14 |
| A | LG ELECTRONICS. Other aspects on AI/ML for positioning accuracy enhancement. R1-2204154, 3GPP TSG RAN WG1 #109-e. 29 April 2022. <br>    See pages 1-4. | 1-14 |

[✓] Further documents are listed in the continuation of Box C.          [ ] See patent family annex.

| | |
|---|---|
| *    Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **09 November 2023** | **09 November 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/011207**

**C. DOCUMENTS CONSIDERED TO BE RELEVANT**

| Category* | Citation of document, with indication, where appropriate, of the relevant passages | Relevant to claim No. |
|---|---|---|
| A | NOKIA et al. Other aspects on AI/ML for positioning accuracy enhancement. R1-2204576, 3GPP TSG RAN WG1 #109-e. 29 April 2022.<br>See pages 1-7. | 1-14 |

Form PCT/ISA/210 (second sheet) (July 2022)